# EUROPEAN PATENT SPECIFICATION

(11) **EP 0 979 148 B1**
(45) Date of publication and mention of the grant of the patent: **15.10.2003**
(21) Application number: 98916751.5
(22) Date of filing: 29.04.1998
(51) Int. Cl.: B04C 5/04, B04C 5/12, B04C 5/20, B04C 11/00, B01D 17/02

(54) **HYDROCYCLONE FOR SEPARATING IMMISCIBLE FLUIDS AND REMOVING SUSPENDED SOLIDS**
HYDROZYKLON ZUR TRENNUNG VON NICHT MISCHBAREN FLÜSSIGKEITEN UND ABTRENNUNG VON SUSPENDIERTEN FESTSTOFFEN
HYDROCYCLONE PERMETTANT DE SEPARER DES FLUIDES NON MISCIBLES ET DE RETIRER DES SOLIDES EN SUSPENSION

(30) Priority: 29.04.1997 US 848276
(43) Date of publication of application: 16.02.2000
(73) Proprietor: Her Majesty in Right of Canada as represented by the Minister of Natural Resources Canada, Ottawa Ontario K1A 0E4 (CA)
(72) Inventor: HASHMI, Khalid, A., Edmonton, Alberta T6J 2X8 (CA); HAMZA, Hassan, A., Edmonton, Alberta T6C 1X2 (CA); FRIESEN, Wally, I., Edmonton, Alberta T6K 3G1 (CA); KAR, Kanti, L., Calgary, Alberta T2J 6L3 (CA); THEW, Martin, T., Ripon, North Yorkshire HG4 2DL (GB)
(74) Representative: Leale, Robin George
(86) International application number: PCT/CA98/00403
(87) International publication number: WO 98/048942

(56) References cited:
- EP-A- 0 313 197
- WO-A-91/14492
- DE-A- 3 936 078
- FR-A- 2 062 764
- GB-A- 465 897
- GB-A- 2 107 616
- US-A- 3 034 647
- US-A- 5 017 288

## Description

### Technical Field

This invention relates to a cyclone separator. It relates more particularly to a hydrocyclone for separating immiscible fluids, e.g. oil and water, and removing suspended solids, as well as a method for carrying out such separation.

### Background Art

In heavy oil production, it is commonplace for fluids produced at the well head to contain in excess of 70 percent by volume of water, as well as varying amounts of suspended solids. In order to transport and process the oil and safely dispose of or recycle the water, it is necessary to separate these components in an efficient manner.

A variety of different cyclone separators have been developed for this purpose. For instance, Thew et al. U.S. Patent 5,017,288 describes a cyclone separator for removing oil from water having a first cylindrical section or involute followed by a pair of converging funnel shaped sections. The oil is removed through an overflow outlet at a closed end of the cylindrical section, while the water travels down the funnel shaped sections.

This general description of cyclone separators may also be found in WO-A-9114492 and U.S. Patent 3,034,647. In GB-A-2107616 there is described a retractable plug that may be used in the overflow outlet to change the size of the outlet. EP-A-313197 describes a cyclone separator of the above general type for separating oil from water in which outlets are provided for water along the funnel shaped sections.

Kuryluk U.S. Patent 5,564,574 describes a separator for separating materials of different specific gravities, including materials of non-uniform size. That system employs a rotating agitator as a primary means of imparting rotational energy to the materials being processed. It also depends on separate injection of water and separate chambers for mixing and dilution.

It is the object of the present invention to provide a hydrocyclone which provides improved separation of oil and water, while also being capable of removing solids.

### Disclosure of the Invention

An important aspect of this invention is the design of the generally cylindrical first portion or involute, which makes the hydrocyclone of this invention traditional hydrocyclones. The involute is, of course, the most critical area of the hydrocyclone. Firstly, the hydrocyclone of this invention has an involute that is substantially longer than that of conventional hydrocyclone. Secondly, it uses a plurality of radially balanced feed injection ports into the involute. These are arranged so that all separation of the immiscible fluids, e.g. oil and water, occurs in the involute which is the area of highest G-forces. The result is the formation of an axial low density phase which is very stable and is essentially in the form of a straight reverse axial fluid plug flow. This makes possible an exceptionally clean separation between the oil and water.

Accordingly, one aspect of the present invention relates to a cyclone separator comprising a generally cylindrical first portion or involute with an open end and a closed end. A generally axial overflow outlet is provided in the closed end. The separator includes at least two radially balanced feed injection ports in the cylindrical first portion or involute adjacent to closed end thereof. A converging tapered second section with open ends is axially flow connected to the open end of the cylindrical first portion and preferably a converging tapered third portion with open ends is axially flow connected to the tapered second portion. A fourth generally cylindrical portion preferably is axially flow connected to the third tapered portion.

An important part of the invention relates to the number and arrangement of the feed injection ports. These are located in the involute adjacent the closed end thereof and are tangentially mounted so as to provide a rapidly rotating vortex under low-shear conditions. The importance of the injection ports has not previously been understood. For instance, in U.S. Patent 4,722,796, two feed injection ports were used. In U.S. Patent 5,017,288, there is reference to the above patent and there is also the statement "it was found that one inlet or more than two inlets could be used". This indicates that the inventors saw no significance in the number of injection ports.

However, it has now been found that by using a plurality of these injection ports together with a lengthened involute, a superior separation is achieved. Particularly good results are obtained when at least four radially balanced feed injection ports are used. These are arranged as pairs of diametrically opposite ports so that, for instance, it is also possible to use six or eight diametrically opposite ports depending on the size of the involute.

Through detailed studies of the flow patterns, it was found that when only one feed injection port was used the low density core that was formed in the involute exhibited a generally spiral or corkscrew configuration. There were some improvements in the low density core when two or three injection ports were used, but a dramatic improvement took place when four injection ports were used arranged as two pairs of diametrically opposed ports. The balanced propulsion forces generated provide improved stability of the resulting vortex, reduced turbulent energy loss and enhanced separation efficiency.

It will be appreciated that since the actual separation of the immiscible fluids takes place by discharging the low density core out through the axial overflow outlet, there is great advantage in having the low density core in the form of a straight axial core with a sharp interface between it and the surrounding higher density fluid. In this way the low density core is able to pass through the overflow outlet while entraining a minimum amount of surrounding high density fluid. It is this superior separation that is obtained when using at least four injection ports together with the longer involute.

The required length for the involute is easily determined when the concept is understood. An experimental unit may be used having a transparent involute. A dye is added to the fluid mixture with the result that the separated lower density phase can be observed within the higher density phase. If the involute is too short, the axial lower density core does not form in the involute. On the other hand, when the involute has sufficient length the axial lower density core can be clearly observed as a core extending the length of the involute and passing through the axial overflow outlet.

According to a further feature of this invention, the size of the axial overflow outlet may be varied. This can be achieved by providing a movable member in association with the overflow outlet having a plurality of orifices of progressively smaller diameter than the overflow outlet. This movable member may be moved such that any selected one of the plurality of orifices may be axially aligned with the overflow outlet.

This multiple orifice system comprises a plurality of orifices of different diameters in a plate which is movably mounted on the end of the cylindrical first portion. Preferably, this plate is rotatably mounted such that it can be actuated by a powered assembly.

This adjustable overflow outlet has important advantages in commercial operations. Thus, the fluids being separated may be quite variable in concentrations. For instance, it may change from oil content of 10% to an oil content of 20%. The only way that the system can adapt for this is to increase the size of the overflow outlet. Otherwise, much of the oil remains with the water. With the variable size overflow outlet of the invention, this outlet size can be adjusted either manually or automatically based on the composition of the fluids being separated.

Because of the very efficient separation of immiscible fluids that is possible according to this invention, it is capable of use in a great variety of situations. Thus, it is capable of removing very small quantities of oil, e.g. 1 to 2%, from water and it is able to separate very difficult fluid mixtures. For instance, it may be used to separate oil which is emulsified with very small droplet sizes and has also separated fluids having density differences of as little as 0.05. Also, because such a stable low density core is formed with the hydrocyclone of this invention, it can be installed for separating a fluid mixture of known composition in a pipeline in a remote location. Separation efficiencies have been as high as 98%.

Another unique feature of the present invention is a cooperating means for removing particulate material in the feed stream. This is accomplished by arranging the fourth generally cylindrical portion as a pair of radially aligned tubes with an axial gap therebetween. This gap is in turn enclosed by an outer tubular portion providing an annular flow chamber connected to a discharge outlet. Because of the centrifugal forces within the fourth generally cylindrical portion, the denser particulate material travelling along the outer wall of the cylindrical portion passes through the gap between the tubes and into the annular chamber to be discharged through the discharge outlet. The water in the cylindrical portion does not tend to pass through the gap but instead continues on down through the second tubular portion for discharge.

### Brief Description of the Drawings

A presently preferred embodiment of the cyclone separator of the present invention will now be described in conjunction with the accompanying drawings, in which:
Fig. 1 is an elevational view, partly in cross section of a separator according to the invention;
Fig. 2 is an enlarged portion of the embodiment of Fig. 1;
Fig. 3 is an end elevation of an orifice plate;
Fig. 4 is a partial sectional view of an orifice plate;
Fig. 5 is an end elevation of the closed end of the hydrocyclone;
Fig. 6 is an elevational view in cross section showing the cylindrical first portion; and
Fig. 7 is an elevational view in cross section showing an outer casing and water jacket assembly.

### Best Modes for Carrying Out the Invention

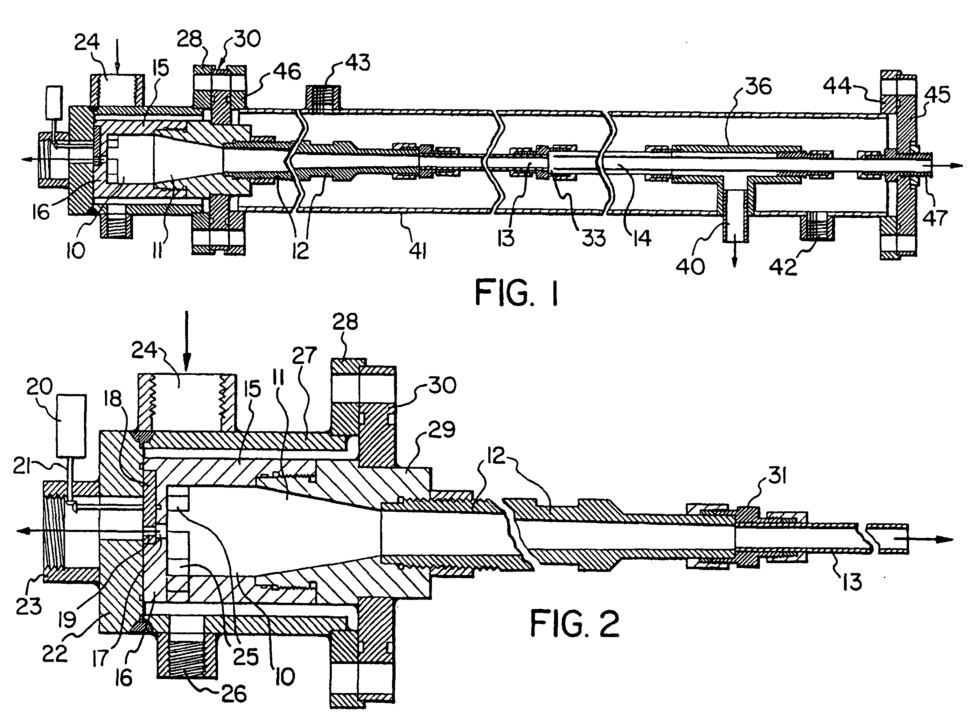

As seen in Figs. 1 and 2, the hydrocyclone assembly of the invention includes a generally cylindrical first portion or involute 10, a first tapered section 11 axially aligned with the involute 10, a second tapered section 12 axially aligned with section 11 and a tubular barrel 13 axially aligned with tapered section 12. Connected to the end of tubular barrel 13 is a water collection tube 14.

The involute 10 includes a body portion 15 with a closed end wall 16. An orifice 17 is located axially in the end wall 16. The involute section 10 also includes a plurality (preferably at least four) feed injection ports 25 which are tangentially mounted and equally spaced around the circumference thereof.

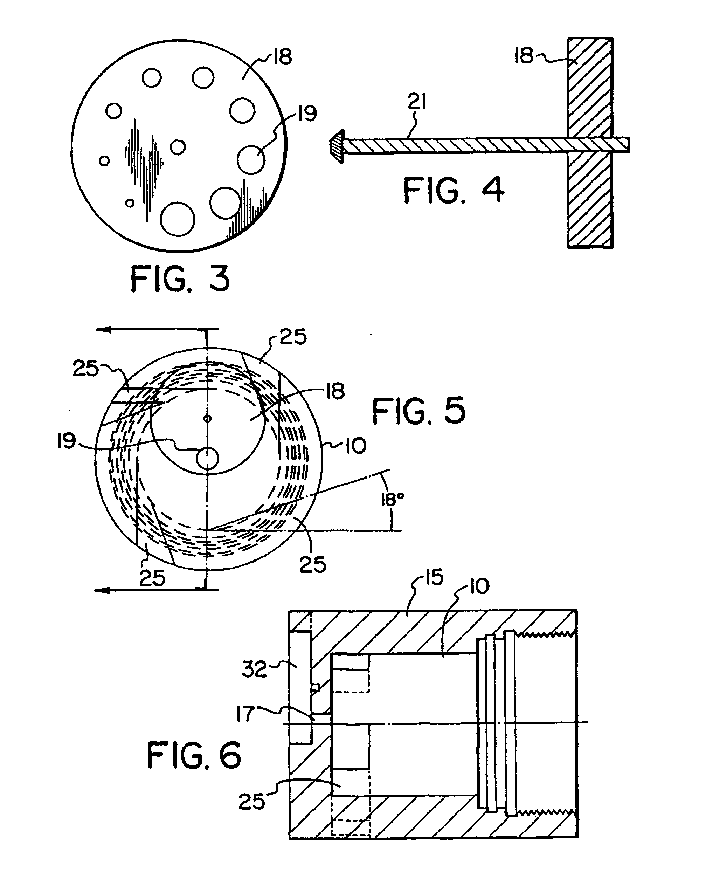

When a feedstock containing oil and water is fed through inlet 24 and injection ports 25, a rapidly rotating vortex is formed under low-shear conditions. The centrifugal forces generated by the vortex act differently on the denser (water) phase and the less-dense (oil) phase such that the oil phase is displaced toward the central axis of the cyclone and forms a reverse flow towards the overflow orifice 17. Because it has been found advantageous to be able to adjust the size of the orifice 17 depending on the nature of the feedstock to optimize separation, a further feature of the present invention is a system for adjusting the effective orifice size. This is accomplished by means of a rotatable plate 18 (as shown in Figs. 3 and 4) having a plurality of orifices of different size 19. This plate 18 can be rotated either manually or by means of a power unit 20 via drive shafts 21. By this power means, any selected one of the orifices 19 in rotatable plate 18 is brought into axially alignment with orifice 17 to thereby effectively change the diameter of the orifice 17.

The first tapered section 11 includes a body portion 29 screw connected to the body portion 15 of the involute 10. Surrounding these is an outer wall 27 through which the inlet 24 passes and to which is connected a flange plate 28. The body portion 29 also has a flange plate 30 which is connected to flange plate 28.

The second tapered section 12 is screw connected to the body portion 29 of the first tapered section 11 and this in turn is connected to the water barrel or tube 13 by means of connector assembly 31.

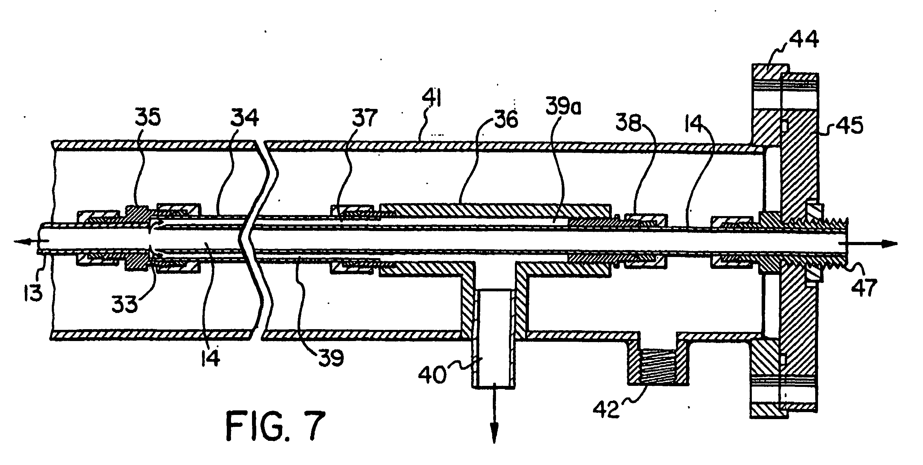

At the downstream end of barrel 13 is a further assembly for separating solid particles from the water being carried down barrel 13. This includes a water collection tube 14 which is axially spaced from the end of barrel 13 by a gap 33 as best seen in Fig. 7. The barrel 13 and tube 14 are held in this spaced relationship by means of an outer tube 34, a T-assembly 36 and connector flanges 35, 37 and 38. This arrangement provides an annular chamber 39 surrounding the gap 33 and surrounding tube 13. Since the density of the solids is greater than that of water, the solids tend to migrate to the outer edges of the vortex flow in barrel 13 so that when they reach the gap 33, the particles tend to pass through the gap and into the annular chamber 39 while the bulk of the water continues to flow into the water collection tube 14, with the solids being collected at outlet 40. The water, free of particles and oil discharges through outlet 47.

It is possible to enhance the separation by heating the liquids being processed, thereby reducing the viscosity of the oil and increasing separation efficiency. This heat can be provided by means of a heating jacket formed by outer shell 41, having an inlet port 42 and an outlet port 43 for heating liquids. The downstream end of the outer shell 41 is connected to a flange 44, which in turn connects to a flange 45 which holds the outer end of the water collection tube 14.

A hydrocyclone was constructed as shown in the above drawings. The involute 10 had a length of 4.0 cm and an interior diameter of 4.0 cm. The first tapered section 11 was 5.7 cm long with a large diameter of 2.0 cm. The second tapered section 12 had a length of 38.8 cm, with a large diameter of 2.0 cm and a small end diameter of 1.0 cm.

### Example 1

The above hydrocyclone was used at a heavy oil production site to separate a well head stream (from horizontal well production) containing 20-25% by volume of oil in water. The hydrocyclone product stream (overflow) contained as much as 85% oil, while the oil content in the water stream (underflow) contained as little as 150 ppm oil. The feed flowrate varied between 35 and 50 L/min depending on pressure settings. It was found that higher feed temperatures improved separation, with a temperature of at least 40°C being preferred. In comparison, a corresponding gravity separation, such as Free Water Knockout, requires a temperature in the order of 50-75°C.

### Example 2

A further test was conducted using as feed a high-water-cut production fluid containing about 2-3% by volume of oil in brine. This was separated into a clean water stream (underflow) containing no more than 100 ppm oil and an oil-rich stream (overflow) containing 5-20% oil, depending on the oil concentration of the feed. The feed was at a temperature of 60-65°C and the underflow discharge rate varied from 95-99% of the feed rate.

## Claims

1. A cyclone separator for separating immiscible fluids comprising a generally cylindrical first portion (10) with an open end and a closed end (16), a generally axial overflow outlet (17) in said closed end (16), feed injection ports (25) in said cylindrical first portion (10) adjacent the closed end (16) thereof, at least one converging tapered portion (11) with open ends axially flow connected to the open end of the cylindrical first portion (10), and a generally cylindrical discharge portion (13) axially flow connected to said tapered portion (11),
**characterized in that** at least four radially balanced feed injection ports (25) are provided adjacent the closed end (16) of the cylindrical first portion (10) with the combination of the multiple injection ports (25) and the length of the cylindrical first portion (10) being adapted to fully separate the fluids within the cylindrical first portion (10) into a straight reverse axial plug flow of a lower density phase within a forward flow of higher density phase.

2. A separator according to Claim 1 **characterized in that** the injection ports (25) are tangentially mounted to provide a rapidly rotating vortex under low-shear conditions.

3. A separator according to Claim 2 **characterized in that** the injection ports (25) are arranged in diametrically opposed pairs.

4. A separator according to Claim 1, 2 or 3 **characterized in that** said at least one converging tapered portion comprises a first tapered portion (11) and a second tapered portion (12).

5. A separatör according to Claim 1 **characterized in that** the generally cylindrical discharge portion comprises a pair of radially aligned tubes (13,14) with a gap (33) therebetween, said gap (33) being enclosed by an outer tubular portion (34) providing an annular flow chamber (39) and a discharge outlet (40) associated with said annular chamber (39) whereby solid particles carried in a liquid stream travelling through said generally cylindrical discharge portion are removed through said gap (33) and discharge outlet (40).

6. A cyclone separator for separating immiscible fluids comprising a generally cylindrical first portion (10) with an open end and a closed end (16), a generally axial overflow outlet (17) in said closed end (16), feed injection ports (25) in said cylindrical first portion (10) adjacent the closed end (16) thereof, at least one converging tapered portion (11) with open ends axially flow connected to the open end of the cylindrical first portion (10), and a generally cylindrical discharge portion (13) axially flow connected to said tapered portion (11),
**characterized in that** a plurality of radially balanced feed injection ports (25) are provided adjacent the closed end (16) of the cylindrical first portion (10) and a moveable member (18) is provided associated with said closed end (16) having a plurality of orifices (19) of progressively smaller diameter than the overflow outlet (17), said moveable member (18) being moveable such that any selected one of said plurality of orifices (19) is axially aligned with said overflow outlet (17), with the length of the cylindrical first portion (10), the number of feed injection ports (25) and the diameter of the orifices (19) being selected such that fluids within the cylindrical first portion (10) are separated into a straight reverse axial plug flow of a lower density phase within a forward flow of higher density phase with the straight reverse axial plug flow being adapted to flow smoothly through a selected orifice (19).

7. A separator according to Claim 6 **characterized in that** the generally cylindrical discharge portion comprises a pair of radially aligned tubes (13,14) with a gap (33) therebetween, said gap (33) being enclosed by an outer tubular portion (34) providing an annular flow chamber (39) and a discharge outlet (40) associated with said annular chamber (39) whereby solid particles carried in a liquid stream travelling through said generally cylindrical discharge portion are removed through said gap (33) and discharge outlet (40).

8. A separator according to Claim 7 **characterized in that** said plurality of orifices (19) are provided in a plate (18) rotatably mounted on the end of said cylindrical first portion (10) .

9. A separator according to Claim 8 **characterized in that** the plate (18) is rotated by powered assembly.

10. A separator according to Claim 1 or 6 **characterized in that** it includes an outer casing (41) forming a heating chamber surrounding the cyclone.

11. A method for separating a mixture of immiscible fluids of differing densities, comprising feeding said mixture into a cyclone separator comprising a generally cylindrical first portion (10) with an open end and a closed end, a generally axial overflow outlet (17) in said closed end (16), feed injection ports (25) in said cylindrical first portion (10) adjacent the closed end (16) thereof, at least one converging tapered portion (11) with open ends axially flow connected to the open end of the cylindrical first portion (10), and a generally cylindrical discharge portion (13) axially flow connected to said tapered portion (11),
**characterized in that** said mixture of fluids of differing densities is fed into said cylindrical first portion (10) through at least four radially balanced feed injection ports (25) and along a sufficient length of said cylindrical first portion (10) whereby the fluids of differing densities separate within the cylindrical first portion (10) into a straight reverse axial plug flow of a lower density phase and a forward flow of a higher density phase, removing the lower density phase through the axial overflow outlet (17) and removing the higher density phase through the cylindrical discharge (13) .

12. A method according to Claim 11 **characterized in that** the mixture of immiscible fluids is a mixture of oil and water.

13. A method according to Claim 12 **characterized in that** a moveable member (18) having a plurality of orifices (19) of progressively smaller diameter than the overflow outlet (17) is provided in association with said overflow outlet (17), and an orifice is selected which corresponds to the diameter of the axial plug flow of lower density phase.

14. A method according to Claim 12 **characterized in that** the mixture contains up to 30% oil.

15. A method according to Claim 12 **characterized in that** the mixture contains about 1-2% oil.

## Patentansprüche

1. Zyklonabscheider zum Trennen nichtmischbarer Fluida, der einen im Wesentlichen zylindrischen ersten Abschnitt (10) mit einem offenen Ende und einem geschlossenen Ende (16), einen im Wesentlichen axialen Überlaufauslass (17) in dem geschlossenen Ende (16), Einspritzöffnungen (25) in dem zylindrischen ersten Abschnitt (10), die dessen geschlossenem Ende (16) benachbart sind, mindestens einen kegelförmig zulaufenden Abschnitt (11) mit offenen Enden, der an die Strömung des offenen Endes des zylindrischen ersten Abschnitts (10) axial angeschlossen ist, und einen im Wesentlichen zylindrischen Entleerungsabschnitt (13), der an die Strömung des kegelförmigen Abschnitts (11) axial angeschlossen ist, umfasst,
**dadurch gekennzeichnet, dass**
mindestens vier radialsymmetrisch verteilte Einspritzöffnungen (25) geschaffen sind, die dem geschlossenen Ende (16) des zylindrischen ersten Abschnitts (10) benachbart sind, wobei die Kombination der mehreren Einspritzöffnungen (25) und die Länge des zylindrischen ersten Abschnitts (10) angepasst sind, um die Fluida innerhalb des zylindrischen ersten Abschnitts (10) vollständig in eine gerade, umgekehrte, axiale, ideale Strömung einer Phase geringerer Dichte innerhalb einer Vorwärtsströmung einer Phase höherer Dichte zu trennen.

2. Abscheider nach Anspruch 1, **dadurch gekennzeichnet, dass** die Einspritzöffnungen (25) tangential angebracht sind, um unter scherungsarmen Bedingungen einen schnell rotierenden, starken Wirbel zu schaffen.

3. Abscheider nach Anspruch 2, **dadurch gekennzeichnet, dass** die Einspritzöffnungen (25) in gegenüberliegenden Paaren angeordnet sind.

4. Abscheider nach Anspruch 1, 2 oder 3, **dadurch gekennzeichnet, dass** mindestens ein kegelförmig zulaufender Abschnitt einen ersten kegelförmigen Abschnitt (11) und einen zweiten kegelförmigen Abschnitt (12) aufweist.

5. Abscheider nach Anspruch 1, **dadurch gekennzeichnet, dass** der im Wesentlichen zylindrische Entleerungsabschnitt ein Paar radial ausgerichtete Rohre (13, 14) mit einem Spalt (33) dazwischen, wobei der Spalt (33) von einem äußeren röhrenförmigen Abschnitt (34) umschlossen ist, der eine ringförmige Strömungskammer (39) schafft, und einen Entleerungsauslauf (40) umfasst, welcher mit der ringförmigen Kammer (39) verbunden ist, wodurch feste Teilchen, die in einem Flüssigkeitsstrom getragen werden, der sich durch den im Wesentlichen zylindrischen Entleerungsabschnitt bewegt, durch den Spalt (33) und Entleerungsauslauf (40) entfernt werden.

6. Zyklonabscheider zum Trennen nichtmischbarer Fluida, der einen im Wesentlichen zylindrischen ersten Abschnitt (10) mit einem offenen Ende und einem geschlossenen Ende (16), einen im Wesentlichen axialen Überlaufauslass (17) in dem geschlossenen Ende (16), Einspritzöffnungen (25) in dem zylindrischen ersten Abschnitt (10), die dessen geschlossenem Ende (16) benachbart sind, mindestens einen kegelförmig zulaufenden Abschnitt (11) mit offenen Enden, der an die Strömung des offenen Endes des zylindrischen ersten Abschnitts (10) axial angeschlossen ist, und einen im Wesentlichen zylindrischen Entleerungsabschnitt (13), der an die Strömung des kegelförmigen Abschnitts (11) axial angeschlossen ist, umfasst,
**dadurch gekennzeichnet, dass**
mehrere radialsymmetrisch verteilte Einspritzöffnungen (25) geschaffen sind, die dem geschlossenen Ende (16) des zylindrischen ersten Abschnitts (10) benachbart sind, und ein bewegliches Glied (18) geschaffen ist, das mit dem geschlossenen Ende (16) verbunden ist und das mehrere Öffnungen (19) mit zunehmend kleinerem Durchmesser als der Überlaufauslass (17) aufweist, wobei das bewegliche Glied (18) in einer Weise beweglich ist, dass jede ausgewählte der mehreren Öffnungen (19) axial mit dem Überlaufauslass (17) ausgerichtet wird, wobei die Länge des zylindrischen ersten Abschnitts (10), die Anzahl der Einspritzöffnungen (25) und der Durchmesser der Öffnungen (19) so gewählt sind, dass Fluida innerhalb des zylindrischen ersten Abschnitts (10) in eine gerade, umgekehrte, axiale, ideale Strömung einer Phase geringerer Dichte innerhalb einer Vorwärtsströmung einer Phase höherer Dichte getrennt werden, wobei die gerade, umkehrte, axiale, ideale Strömung angepasst ist, um gleichmäßig durch eine ausgewählte Öffnung (19) hindurchzuströmen.

7. Abscheider nach Anspruch 6, **dadurch gekennzeichnet, dass** der im Wesentlichen zylindrische Entleerungsabschnitt ein Paar radial ausgerichtete Rohre (13, 14) mit einem Spalt (33) dazwischen, wobei der Spalt (33) von einem äußeren röhrenförmigen Abschnitt (34) umschlossen ist, der eine ringförmige Strömungskammer (39) schafft, und einen Entleerungsauslauf (40) umfasst, der mit der ringförmigen Kammer (39) verbunden ist, wodurch feste Teilchen, die in einem Flüssigkeitsstrom getragen werden, der sich durch den im Wesentlichen zylindrischen Entleerungsabschnitt bewegt, durch den Spalt (33) und Entleerungsauslauf (40) entfernt werden.

8. Abscheider nach Anspruch 7, **dadurch gekennzeichnet, dass** die mehreren Öffnungen (19) in einer Platte (18) geschaffen sind, die drehbar an dem Ende des zylindrischen ersten Abschnitts (10) angebracht ist.

9. Abscheider nach Anspruch 8, **dadurch gekennzeichnet, dass** die Platte (18) durch eine motorisch getriebene Einheit gedreht wird.

10. Abscheider nach Anspruch 1 oder 6, **dadurch gekennzeichnet, dass** er ein äußeres Gehäuse (41) einschließt, das eine Heizkammer bildet, die den Zyklon umgibt.

11. Verfahren zum Trennen einer Mischung aus nichtmischbaren Fluida unterschiedlicher Dichten, welches das Einbringen der Mischung in einen Zyklonabscheider umfasst, der einen im Wesentlichen zylindrischen ersten Abschnitt (10) mit einem offenen Ende und einem geschlossenen Ende, einen im Wesentlichen axialen Überlaufauslass (17) in dem geschlossenen Ende (16), Einspritzöffnungen (25) in dem zylindrischen ersten Abschnitt (10), die dessen geschlossenem Ende (16) benachbart sind, mindestens einen kegelförmig zulaufenden Abschnitt (11) mit offenen Enden, der an die Strömung des offenen Endes des zylindrischen ersten Abschnitts (10) axial angeschlossen ist, und einen im Wesentlichen zylindrischen Entleerungsabschnitt (13), der an die Strömung des kegelförmigen Abschnitt (11) axial angeschlossen ist, umfasst
**dadurch gekennzeichnet, dass**
die Mischung aus Fluida unterschiedlicher Dichten in den zylindrischen ersten Abschnitt (10) durch mindestens vier radialsymmetrisch verteilte Einspritzöffnungen (25) und längs einer ausreichenden Länge des zylindrischen ersten Abschnitts (10) eingebracht wird, wodurch die Fluida unterschiedlicher Dichten sich innerhalb des zylindrischen ersten Abschnitts (10) in eine gerade, umgekehrte, axiale, ideale Strömung einer Phase geringerer Dichte und eine Vorwärtsströmung einer Phase höherer Dichte trennen, wodurch die Phase geringerer Dichte durch den axialen Überlaufauslass (17) entfernt wird und die Phase höherer Dichte durch die zylindrische Entleerung (13) entfernt wird.

12. Verfahren nach Anspruch 11, **dadurch gekennzeichnet, dass** die Mischung nichtmischbarer Fluida eine Mischung aus Öl und Wasser ist.

13. Verfahren nach Anspruch 12, **dadurch gekennzeichnet, dass** ein bewegliches Glied (18), das mehrere Öffnungen (19) von zunehmend kleinerem Durchmesser als der Überlaufauslass (17) aufweist, in Verbindung mit dem Überlaufauslass (17) geschaffen ist, und eine Öffnung ausgewählt wird, die dem Durchmesser der axialen idealen Strömung der Phase geringerer Dichte entspricht.

14. Verfahren nach Anspruch 12, **dadurch gekennzeichnet, dass** die Mischung bis zu 30 % Öl enthält.

15. Verfahren nach Anspruch 12, **dadurch gekennzeichnet, dass** die Mischung etwa 1 bis 2 % Öl enthält.

## Revendications

1. Hydrocyclone destiné à séparer des fluides non miscibles comprenant une première partie généralement cylindrique (10) avec une extrémité ouverte et une extrémité fermée (16), un orifice de trop-plein généralement axial (17) dans ladite extrémité fermée (16), des orifices d'injection (25) dans ladite première partie cylindrique (10) adjacents à l'extrémité fermée (16) de celle-ci, au moins une partie effilée convergente (11) avec des extrémités ouvertes reliées en écoulement axial à l'extrémité ouverte de la première partie cylindrique (10) et une partie de refoulement généralement cylindrique (13) reliée en écoulement axial à ladite partie effilée (11),
**caractérisé en ce qu'**au moins quatre orifices d'injection équilibrés de manière radiale (25) sont proposés adjacents à l'extrémité fermée (16) de la première partie cylindrique (10) avec la combinaison d'orifices d'injection multiples (25) et la longueur de la première partie cylindrique (10) étant adaptée pour entièrement séparer les fluides à l'intérieur de la première partie cylindrique (10) en un écoulement à bouchons inversé droit axial d'une phase de densité inférieure dans un écoulement vers l'avant d'une phase de densité supérieure.

2. Hydrocyclone selon la revendication 1, **caractérisé en ce que** les orifices d'injection (25) sont montés de manière tangentielle afin de proposer un vortex rotatif rapide dans des conditions de faibles contraintes de cisaillement.

3. Hydrocyclone selon la revendication 2, **caractérisé en ce que** les orifices d'injection (25) sont agencés en paires diamétralement opposées.

4. Hydrocyclone selon la revendication 1, 2 ou 3, **caractérisé en ce qu'**au moins une partie effilée convergente comprend une première partie effilée (11) et une seconde partie effilée (12).

5. Hydrocyclone selon la revendication 1, **caractérisé en ce que** la partie de refoulement généralement cylindrique comprend une paire de tubes alignés de manière radiale (13, 14) avec un espace (33) entre eux, ledit espace (33) étant enfermé par une partie tubulaire extérieure (34) proposant une chambre d'écoulement tubulaire (39) et un orifice de refoulement (40) associé à ladite chambre annulaire (39) moyennant quoi des particules solides transportées dans un courant liquide voyageant à travers ladite partie de refoulement généralement cylindrique sont retirées à travers ledit espace (33) et l'orifice de refoulement (40).

6. Hydrocyclone destiné à séparer des fluides non miscibles comprenant une première partie généralement cylindrique (10) avec une extrémité ouverte et une extrémité fermée (16), un orifice de trop-plein généralement axial (17) dans ladite extrémité fermée (16), des orifices d'injection (25) dans ladite première partie cylindrique (10) adjacents à l'extrémité fermée (16) de celle-ci, au moins une partie effilée convergente (11) avec des extrémités ouvertes reliées en écoulement axial à l'extrémité ouverte de la première partie cylindrique (10) et une partie de refoulement généralement cylindrique (13) reliée en écoulement axial à ladite partie effilée (11),
**caractérisé en ce qu'**une pluralité d'orifices d'injection équilibrés de manière radiale (25) sont agencés adjacents à l'extrémité fermée (16) de la première partie cylindrique (10) et un élément mobile (18) est disposé associé à ladite extrémité fermée (16) présentant une pluralité d'orifices (19) de diamètre progressivement plus petit que l'orifice de trop-plein (17), ledit élément mobile (18) étant mobile de telle manière que l'un quelconque de ladite pluralité d'orifices (19) est aligné axialement avec ledit orifice de trop-plein (17), avec la longueur de la première partie cylindrique (10), le nombre d'orifices d'injection (25) et le diamètre des orifices (19) étant sélectionnés afin que les fluides à l'intérieur de la première partie cylindrique (10) soient séparés en un écoulement à bouchons inversé droit axial d'une phase de densité inférieure dans un écoulement vers l'avant d'une phase de densité supérieure avec l'écoulement à bouchons inversé droit axial étant adapté pour s'écouler régulièrement à travers un orifice sélectionné (19).

7. Hydrocyclone selon la revendication 6, **caractérisé en ce que** la partie de refoulement généralement cylindrique comprend une paire de tubes alignés de manière radiale (13, 14) avec un espace (33) entre eux, ledit espace (33) étant enfermé par une partie tubulaire extérieure (34) assurant une chambre d'écoulement tubulaire (39) et un orifice de refoulement (40) associé à ladite chambre annulaire (39) moyennant quoi des particules solides transportées dans un courant liquide voyageant à travers ladite partie de refoulement généralement cylindrique sont retirées à travers ledit espace (33) et l'orifice de refoulement (40).

8. Hydrocyclone selon la revendication 7, **caractérisé en ce que** ladite pluralité d'orifices (19) est agencée dans une plaque (18) montée de manière rotative sur l'extrémité de ladite première partie cylindrique (10).

9. Hydrocyclone selon la revendication 8, **caractérisé en ce que** la plaque (18) est pivotée par un ensemble motorisé.

10. Hydrocyclone selon la revendication 1 ou 6, **caractérisé en ce qu'**il comprend un boîtier extérieur (41) formant une chambre de réchauffage entourant le cyclone.

11. Procédé destiné à séparer un mélange de fluides non miscibles de différentes densités, comprenant l'introduction dudit mélange à l'intérieur d'un hydrocyclone comprenant une première partie généralement cylindrique (10) avec une extrémité ouverte et une extrémité fermée (16), un orifice de trop-plein généralement axial (17) dans ladite extrémité fermée (16), des orifices d'injection (25) dans ladite première partie cylindrique (10) adjacents à l'extrémité fermée (16) de celle-ci, au moins une partie effilée convergente (11) avec des extrémités ouvertes reliées en écoulement axial à l'extrémité ouverte de la première partie cylindrique (10), et une partie de refoulement généralement cylindrique (13) reliée en écoulement axial à ladite partie effilée (11),
**caractérisé en ce que** ledit mélange de fluides de différentes densités est introduit à l'intérieur de ladite première partie cylindrique (10) à travers au moins quatre orifices d'injection équilibrés de manière radiale (25) et le long d'une longueur suffisante de ladite première partie cylindrique (10) moyennant quoi les fluides de différentes densités se séparent à l'intérieur de la première partie cylindrique (10) en un écoulement à bouchons inversé droit axial d'une phase de densité inférieure et un écoulement vers l'avant d'une phase de densité supérieure, retirant la phase de densité inférieure à travers l'orifice de trop-plein axial (17) et retirant la phase de densité supérieure à travers le refoulement cylindrique (13).

12. Procédé selon la revendication 11, **caractérisé en ce que** le mélange de fluides non miscibles est un mélange d'huile et d'eau.

13. Procédé selon la revendication 12, **caractérisé en ce qu'**un élément mobile (18) présentant une pluralité d'orifices (19) de diamètre progressivement plus petit que l'orifice de trop-plein (17) est proposé en association avec ledit orifice de trop-plein (17), et un orifice est sélectionné qui correspond au diamètre de l'écoulement à bouchons axial d'une phase de densité inférieure.

14. Procédé selon la revendication 12, **caractérisé en ce que** le mélange contient jusqu'à 30 % d'huile.

15. Procédé selon la revendication 12, **caractérisé en ce que** le mélange contient environ 1 à 2 % d'huile.
